# EUROPEAN PATENT SPECIFICATION

(11) **EP 2 067 720 B1**
(45) Date of publication and mention of the grant of the patent: **04.01.2017**
(21) Application number: 08075894.9
(22) Date of filing: 21.11.2008
(51) Int. Cl.: B65F 3/08, B65F 1/16

(54) **Device for storing and/or processing confidential material**
Vorrichtung zum Speichern und/oder Bearbeiten von vertraulichem Material
Dispositif de stockage et/ou de traitement de matériel confidentiel

(30) Priority: 03.12.2007 NL 1034785
(43) Date of publication of application: 10.06.2009
(73) Proprietor: Van Schijndel Holding B.V., 6051 KL Maasbracht (NL)
(72) Inventor: Van Schijndel, Cornelis Gijsbertus, 6051 KL Maasbracht (NL)
(74) Representative: Algemeen Octrooi- en Merkenbureau B.V.

(56) References cited:
- DE-C- 10 208 383
- NL-C- 1 023 248
- US-A1- 2005 017 106
- US-A1- 2006 032 957
- US-B2- 6 588 691

## Description

The invention relates to a device for storing and/or processing confidential material according to the preamble of claim 1, and known from DE-A-102.08.383.

Another device, which is mounted on a truck, is known from US-6,588,691. The known device comprises a longitudinally extending container. In said container, the confidential contents of the bins emptied by means of the lifting mechanism are stored. The known device is further provided with an extendable casing. A space is present between the casing and the lifting mechanism, in which space a bin, screened from the outside environment, is vertically movable and tiltable.

Such a casing is required when emptying such bins containing confidential material, and ensures that the confidential material will not be visible from outside when the bins are being emptied. Furthermore, the casing prevents confidential material being blown away.

A drawback of this known device is that a special configuration of the device is required due to the lateral entry of the bin into the container. In addition, because of the extendable casing of the known device, it takes relatively a long time before the device is ready for operation.

It is an object of the present invention to provide a device for storing and/or processing confidential material which has an efficient configuration.

This object is accomplished with the device according to the present invention, according to claim 1.

Mounting the lifting mechanism provided with the fixed casing to one of the two ends extending in the longitudinal direction of the container makes it possible to empty a bin quickly into the container by means of the lifting mechanism, with the container forming the greater part of the volume of the device. The width of the device is furthermore constant at all times. The device according to the present invention has an improved configuration, so that the container of the device according to the present invention will have a larger volume than the device disclosed in US-6,588,691, whilst the overall dimension of the device according to the invention is substantially the same as that of the known device. Preferably, the lifting mechanism provided with the casing extends over substantially the entire end of the container.

The lifting mechanism comprises a loading seat provided with a platform, to which a pivotable ramp is connected, and with a rear wall, by means of which pivotable ramp the bin, once it has been positioned on the platform, can be fixed in a position between the rear wall and the ramp, at least the lower part of the bin can be firmly secured by means of such a loading seat.

The pivotable ramp can preferably be pivoted from a first, preferably vertically extending position, to a second position, in which the end of the ramp opposite the end connected to the platform rests on a floor surface, so that the bin, which is provided with wheels, can be positioned from the floor surface onto the platform via the ramp. Once the ramp is positioned on the platform, the ramp can return from the second position to the first position. The platform is so dimensioned that the bin is clamped between the ramp in first position thereof and the rear wall. In this way movement of the movable bin is no longer possible anyhow.

The term "confidential material" refers to information carriers such as confidential documents, archive material and other confidential paper waste, but also floppy disks and memory sticks.

In the container, the material may be compressed, if desired, thereby increasing the density of the stored material in the container.

One embodiment of the device according to the invention is characterised in that the bin, in which the confidential material is stored, comprises a lock, in which case the lifting mechanism is provided with an unlocking mechanism for unlocking the lock.

It is known per se to provide bins with a relatively small opening, which is for example provided with a flap to be opened against spring force, through which the confidential material can be deposited into the bin. Once the confidential material has been deposited into the bin, removing said material from the bin through said small opening is difficult if not impossible. Furthermore, such bins are provided with a cover or a bottom which can be opened by means of a special tool for emptying the bin. With the device according to the present invention, the bin positioned in the lifting mechanism, which is preferably fully enclosed in the casing, can be unlocked by means of the unlocking mechanism for emptying the bin, so that even the operator of the device is unable to see or contact the contents of the bin. By having access to the confidential material by unlocking and opening the bin take place in a space closed off by the casing, improper use of the confidential material can be prevented. Preferably, the bin is closed off by the casing in such a manner that at least the opened part of the bin is closed off from the outside world by means of the casing. This means that the casing need not fully enclose the bin, but that it must at least enclose the part of the bin that is to be opened.

The bin may be movable by means of wheels, so that the operator can push the bin into the lifting mechanism.

Another embodiment of the device according to the invention is characterised in that the casing is provided with a hatch, via which hatch, when opened, the bin can be moved into the lifting mechanism, after which the bin positioned in the lifting mechanism is at least partially closed off from the outside world by the casing by closing the hatch therein.

Via such a hatch, which can be operated by means of an electric motor, for example, the bin can be quickly placed into the lifting mechanism, after which the bin can be unlocked by means of the unlocking mechanism in the closed position of the hatch for emptying the bin.

Yet another embodiment of the device according to the invention is characterised in that the platform is extendable substantially in horizontal direction.

In this way the platform can be adapted to the dimensions of various bins. The ramp is preferably connected to the extendable end of the platform, making it possible for an operator upon extension of the platform in horizontal direction to position the bin just within the casing without having to enter the casing himself. Furthermore, the bin can be clamped more firmly between the rear wall and the ramp as a result of the platform being retracted. The loading seat is provided with at least one arm, by means of which the ramp can be folded out and be retracted, and by means of which the platform can be extended and retracted. In this way the ramp and the platform can be quickly extended and retracted, and that in an energetically advantageous manner. The time required for loading a bin into the lifting mechanism is significantly reduced by using such a loading seat.

Another embodiment of the device according to the invention is characterised in that the lifting mechanism is further provided with a bin clamp, which can be moved from a first position, in which it extends above the bin, to a second position, in which it extends around the bin, in which second position the bin can be clamped down between the rear wall and the bin clamp.

The bin is firmly clamped down by means of such a bin clamp, so that the bin can undergo the required tilting movement for being emptied. When the bin clamp is in the first position, the bin can be loaded into the loading seat in a simple manner.

Yet another embodiment of the device according to the invention is characterised in that the container comprises a width extending transversely to the longitudinal direction and a height, with the width and the height of the casing enclosing the lifting mechanism being substantially identical to the width and the height of the container, and the length of the casing maximally equalling two-thirds the width of the container, preferably being about 1 metre.

When a container having such dimensions and comprising a lifting mechanism and a casing is used, it is even possible to empty several bins simultaneously, depending on the dimension of said bins. Furthermore, it is possible when using the device according to the present invention to empty much wider bins than is possible with the device known from the above-described US patent. A major advantage of the present invention is the fact that the lift and the casing take up very little space in longitudinal direction, so that the dimensions of the device are mainly determined by the container. This is advantageous in particular in the case of a device which is disposed on a truck, for example, because the total length of the truck is thus reduced, without this being realised at the expense of the storage capacity in the container.

Yet another embodiment of the device according to the invention is characterised in that the bin can be moved upwards by means of the lifting mechanism, during which upward movement the bin can be tilted by means of a tilting mechanism of the lifting mechanism.
Since the upper side of the bin is tilted in the direction of the container while the bin is being lifted, the space for the pivoting path of the bin is limited, so that a limited amount of space is required between the container and the casing. Preferably, the length of the casing is about 1 metre, as indicated above.

Yet another embodiment of the device according to the invention is characterised in that the bin can be tilted through an angle of 90-180 degrees, preferably through an angle of 110-170 degrees, by means of the tilting mechanism. The minimum angle required for emptying the bin is 90 degrees. If the influence of the force of gravity upon emptying of the bin needs to be greater however, it is preferable to use a larger angle. The influence of the force of gravity is greatest if the bin is tilted through 180 degrees. In practice it has been found that the influence of the force of gravity suffices for completely emptying the bin if said angle ranges between 110 and 170 degrees.

Yet another embodiment of the device according to the invention is characterised in that the device is removably or fixedly mounted on a truck or a trailer.

In this way the device can be transported on a truck and/or a trailer to offices or factories where the bins are filled with confidential material. Periodically, a truck and/or a trailer can come around for emptying the bins. It is also possible to mount the device on a trailer which remains at the premises of the factory at the office, so that bins can be emptied all the time. It is also possible to construct a device which can be unloaded from a truck just like a sea container, so that the device can be left at a premises. Once the container is full, it is collected by a truck, so that the full container can be emptied for further destruction of its contents or storage in a warehouse and can be used again, if necessary. In this way, several devices can be delivered/collected by means of a truck in one day. The device may furthermore be provided with a detection means which detects the degree of filling of the container, and also with a communication means which can communicate to a centre that the device is full and needs to be collected.

The invention will now be explained with reference to the appended figures, in which:
Figure 1 is a side view of part of the device according to the invention, which is ready for loading a bin;
Figure 2a is a side view of part of the device according to the invention during the loading of the bin, and figures 2b and 2b are larger-scale side views, showing the unlocking and opening of a bin;
Figure 3 is a side view of part of the device according to the invention, showing the lifting of a bin;
Figure 4 is a side view of part of the device according to the invention, showing the emptying of a bin;
Figures 5a-c are side views of part of the loading seat, showing the operation of this part of the loading seat.
Like parts are indicated by the same numerals in the various figures.

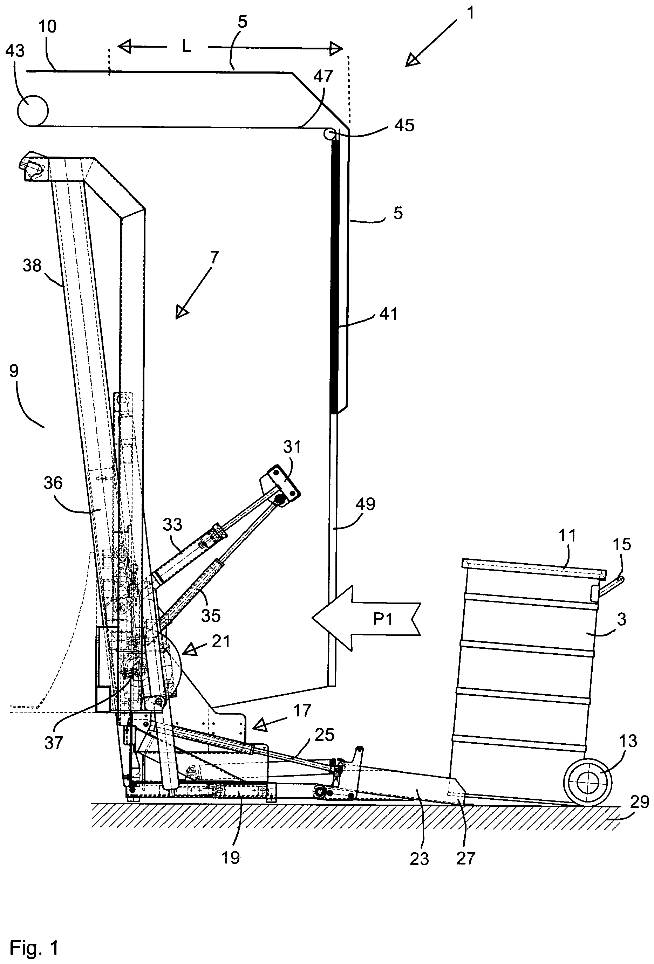

Figure 1 shows a side view of part of the device 1 according to the invention, which is ready for loading a bin 3.

The device 1 comprises a casing 5, a lifting mechanism 7, as well as a container 9, which is only shown in part for easy reference, but which of course comprises a space which is closed off from the outside world, in which processed or unprocessed confidential material can be safely stored.

The upper side of the casing 5 merges with a cover wall 10 of the container 9, as is shown in figure 1.

The bin 3 is preferably provided with a locked cover 11, which can only be opened by means of a special tool. The bin 3 is further provided with wheels 13 and a handle 15, by means of which a user can move the bin 3.

The lifting mechanism 7 comprises a loading seat 17, which is provided with a horizontally extendable platform 19, a rear wall 21, as well as a ramp 23. The ramp 23 is pivotally connected to the platform 19 and can be pivoted by means of the arms 25 from a first, substantially vertical position to a second position as shown in figure 1, in which the end 27 of the ramp 23 remote from the platform 19 is supported on the floor surface 29.

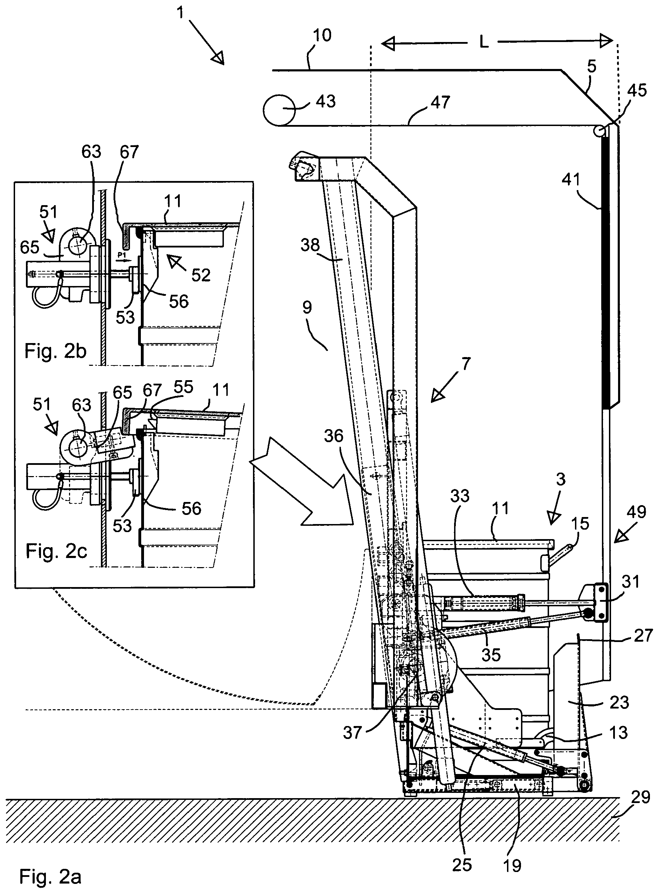

The loading seat 17 further comprises a bin clamp 31, which can be moved by means of telescopic and pivotable arms 33, 35 from a first position, in which the arms 33, 35 and the bin clamp 31 extend upwards at an acute angle with the vertical, so that the bin 3 can be positioned under the arms 33, 35 and the bin clamp 31 in the loading seat 17 without impediment, to a second position, in which the arms 33, 35 and the bin clamp 31 extend around the bin 3 (see figures 2a, 3 and 4).

The lifting mechanism 7 further comprises a lifting frame 36 (indicated by the dotted line), which can be moved upwards and downwards at an acute angle with the vertical by means of two laterally disposed lifting cylinders along two, likewise laterally disposed slide tracks 38. The loading seat 17 is pivotally connected to the lifting frame 36 about an axis 37, about which axis 37 the loading seat 17 can be tilted by means of a tilting mechanism, in such a manner that the bin 3, which is already open at that point, can be emptied into the container 9.

The height h and the width (not shown) of the casing 5 are identical to the height and width of the container 9. The casing 5 with the lifting mechanism 7 present therein has a relatively limited length I, preferably maximally 1.15 m. In most cases the preferred length I of the casing 5 is about 1 metre.

The casing is further provided with a hatch 41, which can be moved from a closed position to an open position (shown in figure 1) by means of an electric motor 43, via a chain 47 passed over a pulley 45, thereby providing an opening 49 through which the bin 3 can be moved in the direction indicated by arrow P1.

Figure 2a shows a side view of part of the device 1 according to the invention while a bin 3 is being loaded, whilst the two larger-scale side views of figures 2b and 2c show the unlocking and the opening of the bin 3.

An operator has positioned the bin 3 shown in figure 2a on the loading seat 17 by means of the ramp 23, and subsequently the ramp 23 has been moved to the first position. Furthermore, the platform 19 has been retracted. The platform 19 and the ramp 23 firmly press the wheels 13 of the bin 3 against the rear wall 21 of the loading seat 17. The arms 33, 35 provided with the bin clamp 31 have tilted from the first position shown in figure 1 to an intermediate position as shown in figure 2. To empty the bin 3, a lock 52 must first be unlocked. Only then can the cover 11 be lifted.

Figures 2b and 2c show an unlocking mechanism 51 for the lock 52, by means of which the cover 11, which is secured against being opened undesirably, can be unlocked and be opened. The lock 52 comprises a catch 55, which catch 55 normally hooks behind a projection (not shown) in the closed condition, so that the cover 11 cannot be opened. This projection can be moved by means of a magnet present in the lock 52.

The unlocking mechanism 51 comprises a lock stamp 53, which can be pneumatically moved onto a contact strip 56 of the lock 52 in the direction indicated by the arrow P1. By supplying a specific voltage by means of the lock stamp 53 positioned against the contact strip 56, the magnet (not shown) in the lock 52 is activated, as a result of which the projection is moved or tilted and the catch 55 is no longer blocked. When the catch 55 is no longer blocked, the cover 11 can be lifted. The unlocking mechanism 51 is further provided with a cover lifter 65, which is pivotable about an axis 63. When the lock 52 is opened, the cover lifter 65 can be moved into abutment with an edge 67 of the cover 11, so that it can lift the cover 11 via the edge 67, as is shown in figure 2c.

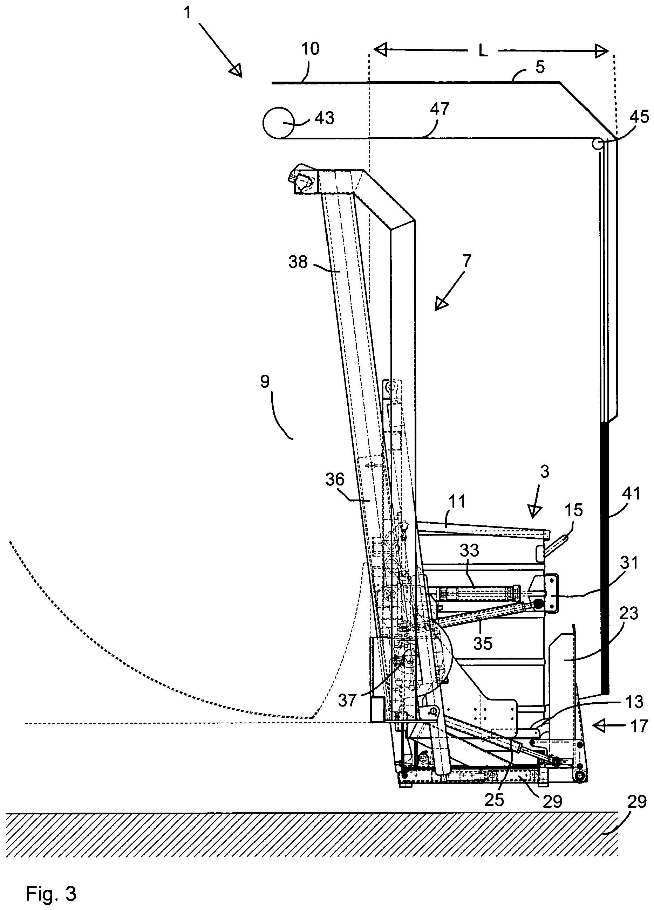

Figure 3 is a side view of part of the device 1 according to the invention, which shows the lifting of the bin 3. The bin clamp 31 has been moved by means of the arms 33, 35 from the intermediate position shown in figure 2a to a position in which it extends around the bin 3, in such a manner even that the bin 3 is pressed firmly against the rear wall 21 of the loading seat 17 by means of the bin clamp 31. The lifting frame 36, together with the loading seat 17 and the bin 3 held therein, has already been slightly moved in vertical direction. The hatch 41 is now in the closed, second position. Furthermore it is apparent from the figure that the cover 11 is already partially lifted by means of the lifting device 63 of the unlocking mechanism 51.

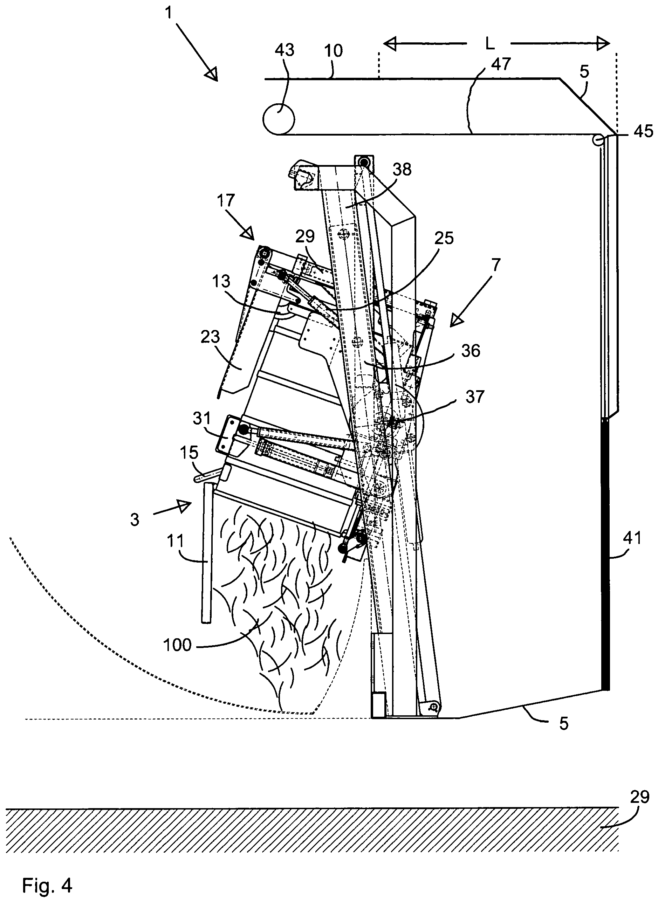

Figure 4 is a side view of part of the device 1 according to the invention, showing the emptying of a bin 3, in which the loading seat 17 has tilted about the axis 37, so that the cover 11 will swing open further under the influence of the force of gravity and the confidential contents 100 of the bin 3 are emptied into the container 9.
The operation of the device 1 according to the present invention is as follows:
The operator opens a box for controlling the device 1 with a key. By opening the hatch 41 which, together with the casing 5, closes the lifting mechanism 7 (the hatch moves to the upper position), an opening 49 is provided, which opening provides access to the lifting mechanism 7.

Preferably, the ramp 23 is folded out simultaneously with the opening of the hatch 41. These operations may also be carried out sequentially, however.

An automatic detection device in the form of at least one proximity switch (not shown) is incorporated in the device, which proximity switch detects what type of bin is being loaded. After said detection of the type of bin, the loading seat 17 of the device 1 is automatically adapted to the dimension(s) of the bin(s) 3 by means of the arms 33, 35, the ramp 23 and the extendable platform 19.

The operator then takes hold of the bin 3, moves it over the ramp 23 and into the device via the opening 49 and positions it in the loading seat 17.

First, the ramp 23 will retract. Preferably, it was folded out against spring pressure (as explained hereinafter). Following that, the platform 19 is retracted and the lower part of the bin 3 is pulled firmly against the rear wall 21. The bin clamp 31 is moved from the first position (figure 1), possibly via an intermediate position (figure 2a), to a second position (figure 3) by means of the arms 33, 35, and the upper side of the bin 3 is pressed firmly against the rear wall 21. Simultaneously therewith, the hatch 41 can be closed, as is shown in figure 3.

Immediately after the hatch 41 has been closed, the unlocking mechanism(s) 51 provided with the cover lifter(s) 65 is (are) actuated.

After the cover 11 of the bin 3 has been opened, the control of the device 1 lifts the load seat 17 to a tipping position (figure 4). The space for the pivoting path of the bin 3 from the loading position (figure 2a) to the tipping position (figure 4) is limited, because the bin 3 retained in the loading seat 17 is directly tilted about the axis 37 in the direction of the container 9 while being lifted. The lifting mechanism 7 may be provided with vibrating means, so that material 100 that is stuck in the bin 3 is vibrated loose and will fall into the container yet under the influence of the force of gravity.

After a brief space of time, the loading seat is pivoted back about the axis 37, with the loading seat 17 being maintained in a straight position until it has landed on the ground.

Simultaneously with the lowering of the loading seat 17, the hatch 41 is opened by the electric motor (the hatch moves upward).

At the end of each loading cycle, which ends when the emptied bin 3 can be wheeled out of the loading seat 17, the operator has a possibility to position the loading seat 17 in a driving position. The loading seat 17 is to that end lifted to a "tipping position" (figure 4). In order to do so, the actions "clamp bin", "close hatch" and "lift" are automatically completed in succession. A hydraulically actuated non-return valve (not shown) causes the loading seat 17 to remain at this position. The loading seat 17 cannot tip on account of its own weight when the tilting motor has no power or during a hydraulic pressure drop.

The material from the bin 3 lands in a trough of the container 9 and must be compressed in the container 9 during the loading cycle. The compression mechanism (not shown) mounted in the container 9 carries out a compression cycle. This process preferably takes place while the bin 3 is being "lowered".

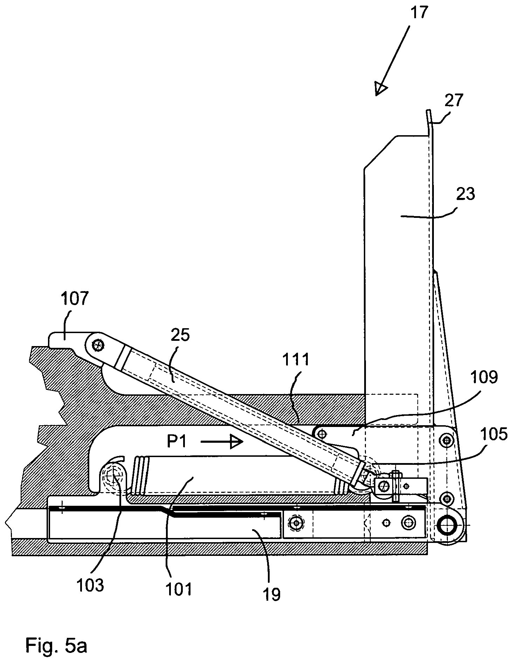

A special preferred embodiment of the loading seat 17 of the device 1 according to the invention is partially shown in figures 5a-c.

In figure 5a the loading seat 17 is shown in a position of rest, in which the ramp 23 extends substantially vertically and the platform 19 is fully retracted. The loading seat 17 is further provided with a spring 101, which is connected to the platform 19 with a first end 103 and which is connected to the ramp 23 with a second end 105.

The arm 25, preferably two arms are provided on either side of the loading seat, is pivotally connected to a fixed part 107 of the loading seat 17 and to the ramp 23.
The ramp 23 further comprises a pressure roller 109, which is movable along a guide 111 of the loading seat 17 in a direction indicated by arrow P1.

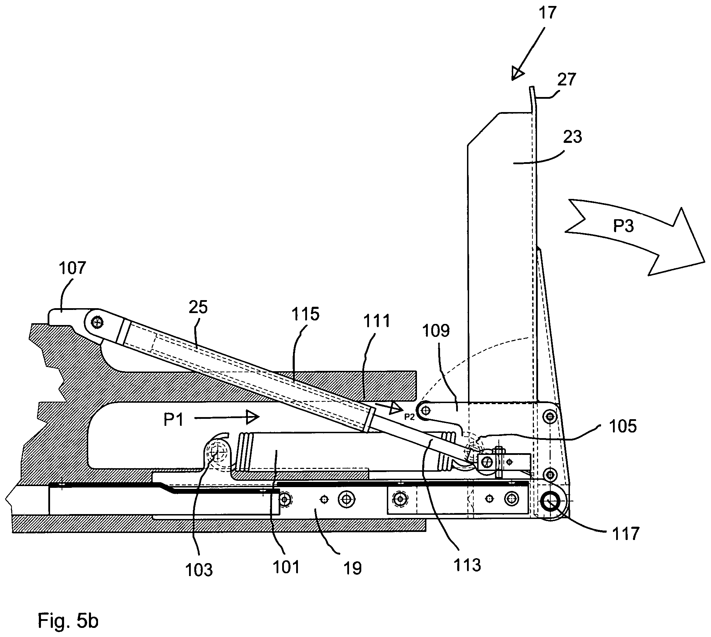

Figure 5b shows the situation when a second part 113 of the arm 24 telescopes out of a first part 115 of the arm 25, which telescoping takes place in the direction indicated by arrow P2. As a result of said telescoping of the arm 25, the platform 19 is extended in a horizontal direction indicated by arrow P1. At the same time, the pressure roller 109 moves substantially horizontally along the guide 111 in the direction indicated by arrow P1, which guide 111 ends at a specific point, from where the ramp 23 can start pivoting about an axis 117 in the direction indicated by arrow P3.

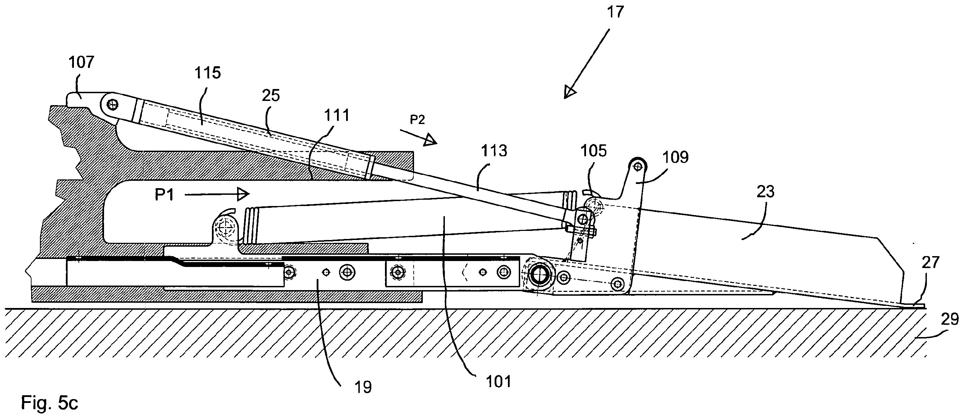

Figure 5c shows how the ramp 23 has been tilted against the spring pressure of the spring 101 from the substantially vertical position shown in figure 5b towards the floor surface 29. The spring pressure of the spring 101 ensures that the ramp 23 is gradually tilted about the axis 117, so that the end 27 of the ramp 23 will not be damaged and touch the floor surface 29 "softly".

Once a bin 3 has been loaded, the second part 113 of the arm 25 is retracted into the first part 115 in the opposite direction of the arrow P2, causing the ramp 23 to pivot back in the opposite direction of the arrow P3 about the axis 117, from the position shown in figure 5c to the position shown in figure 5b. From the position shown in figure 5b, the pressure roller 109 is moved along the guide 111 in the opposite direction of the arrow P1 as a result of the second part 113 being retracted further into the second part 115 of the arm 25, and the platform 19 is likewise retracted in the opposite direction of the arrow P1; the extent to which the pressure roller 109 and the platform 19 are moved to the position of the pressure roller 109 and the platform 19 as shown in figure 5a will depend on the dimension of the loaded bin 3. The platform 19 and the pressure roller 109 are in any case moved so far that the loaded bin 3 is clamped firmly between the ramp 23 and the rear wall 21 of the loading seat 17 for carrying out the above-described steps of opening the lock 52 of the bin 3 and emptying the bin 3. The spring pressure of the spring 101 moreover causes the ramp 23 to be locked in its vertical position.

By means of this construction, three functions are carried out by operating a single, for example hydraulic arm 25, viz extending the platform 19, building the ramp 23 about the axis 117 and locking the ramp 23 in its vertical position.

Such a loading seat 17 makes it possible to load a bin 3 in a quick and reliable manner.

The total amount of time required for carrying out the method of loading the bin 3 by means of the loading seat 17, emptying the same by means of the lifting mechanism and unloading it again is less than 1 minute.

Instead of unlocking the upper side of the cover 11 of the bin 3, it is also possible to unlock the bottom of the bin 3. This manner of emptying will require a different pivoting path for emptying the bin 3, however.

Depending on the dimensions of the bins, two or more bins may be emptied simultaneously by means of the device according to the present invention. In addition to or instead of compressing the confidential material in the container 9 it is also possible to shred said material.

## Claims

1. A device (1) for storing or processing confidential material, which device (1) comprises a substantially longitudinally extending container (9), in which the material is to be stored, which device (1) comprises a lifting mechanism (7), by means of which a bin (3) containing confidential material is emptiable into the container (9), which lifting mechanism (7) is enclosed in a casing (5), wherein the lifting mechanism (7) provided with the casing (5) is mounted on one of the two ends of the container (9) in the longitudinal direction of the container (9), **characterised in that** the lifting mechanism (7) comprises a loading seat (17) provided with a platform (19), to which a pivotable ramp (23) is connected, and with a rear wall (21), by means of which pivotable ramp (23) the bin (3), once it has been positioned on the platform (19), is fixable in a position between the rear wall (21) and the pivotable ramp (23).

2. The device (1) according to claim 1, **characterised in that** the bin (3) in which the confidential material is stored comprises a lock (52), and that the lifting mechanism (7) is provided with an unlocking mechanism (51) for unlocking the lock (52).

3. The device (1) according to claim 1 or to claim 2, **characterised in that** the casing (5) is provided with a hatch (41), via which hatch (41), when opened, the bin (3) is movable into the lifting mechanism (7), after which the bin (3) positioned in the lifting mechanism (7) is at least partially closed off from the outside world by the casing (5) by closing the hatch (41) therein.

4. The device (1) according to claim 2 or to claim 3 in combination with claim 2, **characterised in that** the unlocking mechanism (51) is further provided with a cover lifter (65), which is pivotable about an axis (63), such that when the lock (52) of the bin (3) is opened, the cover lifter (65) is movable into abutment with an edge (67) of the cover (11) of the bin (3), so that it is capable of lifting the cover (11) via the edge (67).

5. The device (1) according to claim 1, **characterised in that** the platform (19) is extendable substantially in horizontal direction.

6. The device (1) according to any one of the preceding claims, **characterised in that** the lifting mechanism (7) is further provided with a bin clamp (31), which is movable from a first, higher position relative to the bin (3) to a second position, in which it extends around the bin (3), in which second position the bin (3) is clampable down between the rear wall (21) and the bin clamp (31).

7. The device (1) according to any one of the preceding claims, **characterised in that** the container (9) comprises a width (B) extending transversely to the longitudinal direction and a height (H), with the width (b) and the height (h) of the casing (5) enclosing the lifting mechanism (7) being substantially identical to the width (B) and the height (H) of the container (9), and the length (I) of the casing (5) maximally equalling two-thirds the width (B) of the container (9), preferably being about 1 metre.

8. The device (1) according to any one of the preceding claims, **characterised in that** the bin (3) is movable upwards by means of the lifting mechanism (7), during which upward movement the bin (3) is tiltable by means of a tilting mechanism of the lifting mechanism (7).

9. The device (1) according claim 8, **characterised in that** the bin (3) is tiltable through an angle of 90-180 degrees, preferably through an angle of 110-170 degrees, by means of the tilting mechanism.

10. The device (1) according to any one of the preceding claims, **characterised in that** the device (1) is removably or fixedly mounted on a truck or a trailer.

## Patentansprüche

1. Vorrichtung (1) zum Lagern oder Verarbeiten von vertraulichem Material, wobei die Vorrichtung (1) einen sich im Wesentlichen längs erstreckenden Container (9), in dem das Material zu lagern ist, und einen Hebemechanismus (7) umfasst, mittels dem ein Behälter (3), der vertrauliches Material beinhaltet, in den Container (9) entleerbar ist, wobei der Hebemechanismus (7) von einem Gehäuse (5) umschlossen ist und der Hebemechanismus (7), der mit dem Gehäuse (5) versehen ist, in Längsrichtung des Containers (9) an einem der beiden Enden des Containers (9) montiert ist, **dadurch gekennzeichnet, dass** der Hebemechanismus (7) einen Ladesitz (17) umfasst, der mit einer Plattform (19), mit der eine schwenkbare Rampe (23) verbunden ist, und einer Rückwand (21) versehen ist, wobei mittels der schwenkbaren Rampe (23) der Behälter (3), wenn er auf der Plattform (19) platziert ist, in einer Stellung zwischen der Rückwand (21) und der schwenkbaren Rampe (23) befestigbar ist.

2. Vorrichtung (1) nach Anspruch 1, **dadurch gekennzeichnet, dass** der Behälter (3), in dem das vertrauliche Material gelagert ist, ein Schloss (52) umfasst und dass der Hebemechanismus (7) mit einem Entsperrmechanismus (51) zum Entsperren des Schlosses (52) versehen ist.

3. Vorrichtung (1) nach Anspruch 1 oder Anspruch 2, **dadurch gekennzeichnet, dass** das Gehäuse (5) mit einer Luke (41) versehen ist, durch die, wenn sie geöffnet ist, der Behälter (3) in den Hebemechanismus (7) bewegbar ist, wonach der Behälter (3), der im Hebemechanismus (7) positioniert ist, durch das Gehäuse (5) und durch Schließen der darin enthaltenen Luke (41) wenigstens teilweise von der Außenwelt abgeschlossen ist.

4. Vorrichtung (1) nach Anspruch 2 oder nach Anspruch 3 in Kombination mit Anspruch 2, **dadurch gekennzeichnet, dass** der Entsperrmechanismus (51) ferner mit einem Deckelheber (65) versehen ist, der um eine Achse (63) derart schwenkbar ist, dass der Deckelheber (65) in Anlage mit einer Kante (67) des Deckels (11) des Behälters (3) bewegbar ist, wenn das Schloss (52) des Behälters (3) geöffnet ist, sodass der Deckelheber (65) den Deckel (11) über die Kante (67) anheben kann.

5. Vorrichtung (1) nach Anspruch 1, **dadurch gekennzeichnet, dass** die Plattform (19) im Wesentlichen in horizontaler Richtung ausziehbar ist.

6. Vorrichtung (1) nach einem der vorhergehenden Ansprüche, **dadurch gekennzeichnet, dass** der Hebemechanismus (7) ferner mit einer Behälterklammer (31) versehen ist, die aus einer ersten, höheren Stellung relativ zum Behälter (3) in eine zweite Stellung bewegbar ist, in der sie um den Behälter (3) herum verläuft, wobei der Behälter (3) in der zweiten Stellung zwischen der Rückwand (21) und der Behälterklammer (31) festklemmbar ist.

7. Vorrichtung (1) nach einem der vorhergehenden Ansprüche, **dadurch gekennzeichnet, dass** der Container (9) eine Breite (B), die sich quer zur Längsrichtung erstreckt, und eine Höhe (H) umfasst, wobei die Breite (b) und die Höhe (h) des Gehäuses (5), das den Hebemechanismus (7) umschließt, im Wesentlichen mit der Breite (B) und der Höhe (H) des Containers (9) übereinstimmen, und die Länge (l) des Gehäuses (5) maximal gleich zwei Drittel der Breite (B) des Containers (9), vorzugsweise ungefähr 1 m, ist.

8. Vorrichtung (1) nach einem der vorhergehenden Ansprüche, **dadurch gekennzeichnet, dass** der Behälter (3) mittels des Hebemechanismus (7) nach oben bewegbar ist, wobei der Behälter (3) während der Aufwärtsbewegung mittels eines Kippmechanismus des Hebemechanismus (7) kippbar beträgt.

9. Vorrichtung (1) nach Anspruch 8, **dadurch gekennzeichnet, dass** der Behälter (3) mittels des Kippmechanismus um einen Winkel von 90 - 180 Grad, vorzugsweise um einen Winkel von 110 - 170 Grad, kippbar ist.

10. Vorrichtung (1) nach einem der vorhergehenden Ansprüche, **dadurch gekennzeichnet, dass** die Vorrichtung (1) abnehmbar oder fest auf einem Lastkraftwagen oder einem Anhänger montiert ist.

## Revendications

1. Dispositif (1) pour stocker ou traiter un matériel confidentiel, lequel dispositif (1) comprend un conteneur (9) s'étendant de manière essentiellement longitudinale, dans lequel le matériel doit être stocké, lequel dispositif (1) comprend un mécanisme de levage (7), au moyen duquel une benne (3) contenant un matériel confidentiel peut être vidée dans le conteneur (9), lequel mécanisme de levage (7) est enfermé dans un boîtier (5), dans lequel le mécanisme de levage (7) doté du boîtier (5) est monté sur l'une des deux extrémités du conteneur (9) dans la direction longitudinale du conteneur (9), **caractérisé en ce que** le mécanisme de levage (7) comprend un siège de chargement (17) doté d'une plate-forme (19), à laquelle une rampe pouvant pivoter (23) est reliée, et d'une paroi arrière (21), au moyen de laquelle rampe pouvant pivoter (23) la benne (3), une fois qu'elle a été positionnée sur la plate-forme (19), peut être fixée dans une position située entre la paroi arrière (21) et la rampe pouvant pivoter (23).

2. Dispositif (1) selon la revendication 1, **caractérisé en ce que** la benne (3) dans laquelle le matériel confidentiel est stocké comprend un verrou (52), et **en ce que** le mécanisme de levage (7) est doté d'un mécanisme de déverrouillage (51) pour déverrouiller le verrou (52).

3. Dispositif (1) selon la revendication 1 ou 2, **caractérisé en ce que** le boîtier (5) est doté d'une trappe (41), par l'intermédiaire de laquelle trappe (41), lorsqu'elle est ouverte, la benne (3) peut se déplacer dans le mécanisme de levage (7), après quoi la benne (3) positionnée dans le mécanisme de levage (7) est au moins partiellement isolée du monde extérieur par le boîtier (5) en fermant la trappe (41) dans celui-ci.

4. Dispositif (1) selon la revendication 2 ou 3 en combinaison avec la revendication 2, **caractérisé en ce que** le mécanisme de déverrouillage (51) est en outre doté d'un élément de levage de couvercle (65), qui peut pivoter autour d'un axe (63), de sorte que, lorsque le verrou (52) de la benne (3) est ouvert, l'élément de levage de couvercle (65) puisse se déplacer en butée contre un bord (67) du couvercle (11) de la benne (3), de manière à ce qu'il soit capable de soulever le couvercle (11) par l'intermédiaire du bord (67).

5. Dispositif (1) selon la revendication 1, **caractérisé en ce que** la plate-forme (19) peut s'étendre essentiellement dans la direction horizontale.

6. Dispositif (1) selon l'une quelconque des revendications précédentes, **caractérisé en ce que** le mécanisme de levage (7) est en outre doté d'une pince à benne (31), qui peut se déplacer d'une première position plus élevée par rapport à la benne (3) à une deuxième position dans laquelle elle s'étend autour de la benne (3), dans laquelle deuxième position, la benne (3) peut être serrée entre la paroi arrière (21) et la pince à benne (31).

7. Dispositif (1) selon l'une quelconque des revendications précédentes, **caractérisé en ce que** le conteneur (9) présente une largeur (B) s'étendant transversalement par rapport à la direction longitudinale et une hauteur (H), avec la largeur (b) et la hauteur (h) du boîtier (5) enfermant le mécanisme de levage (7) étant essentiellement identiques à la largeur (B) et la hauteur (H) du conteneur (9), et la longueur (l) du boîtier (5) égale au maximum à deux tiers la largeur (B) du conteneur (9), étant de préférence d'environ 1 mètre.

8. Dispositif (1) selon l'une quelconque des revendications précédentes, **caractérisé en ce que** la benne (3) peut se déplacer vers le haut au moyen du mécanisme de levage (7), au cours duquel déplacement vers le haut, la benne (3) peut s'incliner au moyen d'un mécanisme d'inclinaison du mécanisme de levage (7).

9. Dispositif (1) selon la revendication 8, **caractérisé en ce que** la benne (3) peut s'incliner selon un angle de 90 à 180 degrés, de préférence selon un angle de 110 à 170 degrés, au moyen du mécanisme d'inclinaison.

10. Dispositif (1) selon l'une quelconque des revendications précédentes, **caractérisé en ce que** le dispositif (1) est monté de manière amovible ou fixe sur un camion ou une remorque.
